# FASCICULE DE BREVET EUROPEEN

(11) **EP 3 365 544 B1**
(45) Date de publication et mention de la délivrance du brevet: **27.11.2019**
(21) Numéro de dépôt: 16790648.6
(22) Date de dépôt: 03.10.2016
(51) Int. Cl.: F02B 75/04, F16C 3/28

(54) **MOTEUR THERMIQUE MUNI D'UN SYSTÈME DE VARIATION DU TAUX DE COMPRESSION**
WÄRMEKRAFTMASCHINE MIT SYSTEM ZUR VERÄNDERUNG DER VERDICHTUNG
HEAT ENGINE COMPRISING A SYSTEM FOR VARYING THE COMPRESSION RATIO

(30) Priorité: 22.10.2015 FR 1560087
(43) Date de publication de la demande: 29.08.2018
(73) Titulaire: PSA AUTOMOBILES S.A., 78300 Poissy (FR); Gomecsys B.V., 1411 AR Naarden (NL)
(72) Inventeur: POGAM, Matthieu, 78400 Chatou (FR); BERGER, Julien, 75019 Paris (FR); DE GOOIJER, Lambertus Hendrik, 1401EP Bussum (NL); WAGENVOORT, Willem-Constant, 1273RG Huizen (NL); WAGENAAR, Sander, 1274GR Huizen (NL)
(86) Numéro de dépôt international: PCT/FR2016/052526
(87) Numéro de publication internationale: WO 2017/068258

(56) Documents cités:
- WO-A1-2009/100759
- DE-A1-102008 032 665
- RU-C1- 2 296 234
- US-A- 5 133 314

## Description

La présente invention porte sur un moteur thermique comportant un système de variation du taux de compression doté d'un pignon intermédiaire étagé.

Le document EP14163870.0 enseigne la réalisation d'un système de variation du taux de compression en fonction des conditions de fonctionnement du moteur. Ce système de variation du taux de compression comporte un ensemble de pièces excentriques montées sur les manetons du vilebrequin de manière à coopérer chacune avec une extrémité de bielle.

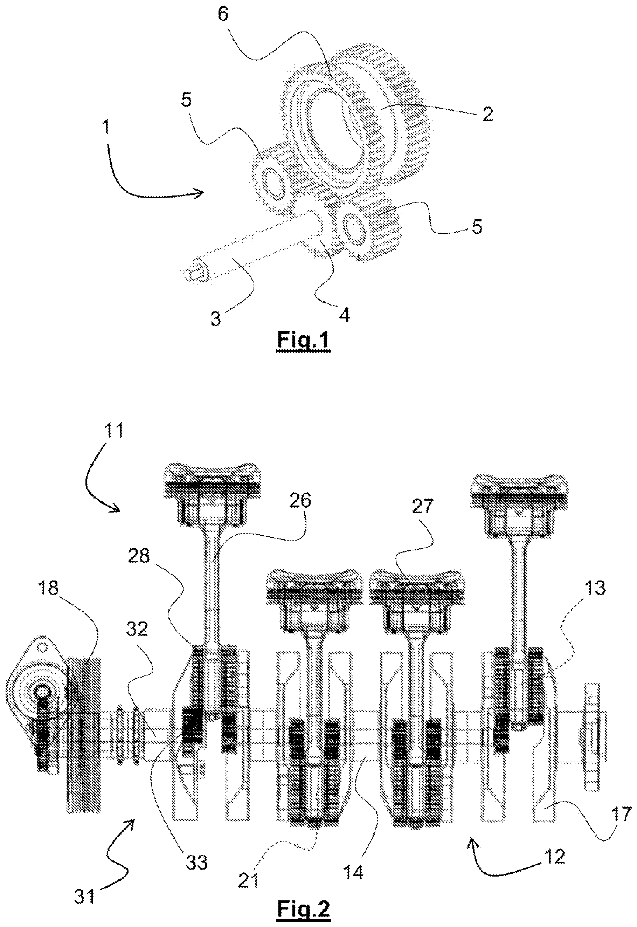

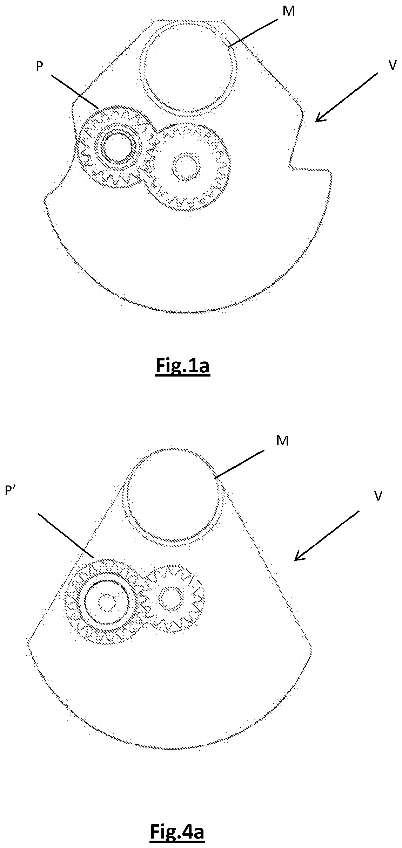

Un dispositif de commande 1 montré en figure 1 permet de régler la position des pièces excentriques 2. A cet effet, le dispositif de commande 1 comporte un arbre d'actionnement 3 et une cascade de pignons constituée par un pignon d'actionnement 4 solidaire de l'arbre d'actionnement 3, et de pignons intermédiaires 5 engrenant d'une part avec le pignon d'actionnement 4 et d'autre part avec une couronne dentée 6 solidaire de la pièce excentrique 2.

En fonctionnement et lorsque l'arbre d'actionnement 3 est fixe en rotation par rapport au bâti, le système présente une configuration de taux de compression fixe. En transitoire de taux, la position angulaire de la pièce excentrique 2 est pilotée par la position angulaire de l'arbre d'actionnement 3 pour ainsi transiter vers un nouveau point de taux de compression. A cet effet, à travers les tourillons du vilebrequin, des arbres et des pignons dits de transfert transmettent la cinématique de la pièce excentrique 2 située du côté de l'arbre d'actionnement 3 de proche en proche vers toutes les autres pièces excentriques 2 du vilebrequin (non visibles sur la figure 1).

Toutefois, le problème d'une telle configuration est que le décalage des plans d'engrenage entre d'une part le pignon d'actionnement 4 et les pignons intermédiaires 5 et d'autre part entre les pignons intermédiaires 5 et la couronne dentée 6 nécessite de creuser un flasque du vilebrequin pour intégrer le pignon d'actionnement 4 et une partie des pignons intermédiaires 5, ce qui fragilise localement le vilebrequin.

En outre, l'équilibrage du vilebrequin peut nécessiter la réduction du flasque opposé, ce qui a tendance également à diminuer la tenue mécanique du vilebrequin. L'usinage du ou des creux ménagés dans le flasque entraîne également une durée d'usinage importante susceptible de générer de nombreux copeaux.

L'invention vise à remédier efficacement à ces inconvénients en proposant un moteur thermique, notamment de véhicule automobile, comportant un système de variation d'un taux de compression dudit moteur, ledit système de variation du taux de compression comprenant:
- au moins une pièce excentrique montée rotative sur un maneton de vilebrequin, ladite pièce excentrique comportant une face externe de forme excentrique destinée à coopérer avec une extrémité d'une bielle, ainsi qu'au moins une couronne dentée,
- un dispositif de commande de la position angulaire de ladite pièce excentrique comportant un pignon d'actionnement monté sur un arbre d'actionnement,
caractérisé en ce que ledit dispositif de commande comporte en outre au moins un pignon intermédiaire étagé comprenant au moins un premier et un deuxième étages formés chacun par un pignon, le pignon dudit premier étage engrenant avec ledit pignon d'actionnement et le pignon dudit deuxième étage engrenant avec ladite couronne dentée d'excentrique.

L'invention permet ainsi de réduire la taille des creusures réalisées dans le flasque du vilebrequin pour recevoir les pignons. On améliore ainsi la tenue mécanique du vilebrequin et donc le niveau de performance atteignable du moteur tout en facilitant l'équilibrage du vilebrequin. La durée d'usinage du vilebrequin est également réduite, ce qui permet de réduire les copeaux et donc d'optimiser le procédé d'usinage. Dans certains cas, le pignon d'actionnement et/ou le pignon d'un des étages pourront avoir une configuration de dents identique à celle des pignons transfert pour limiter le coût de revient du système.

Le moteur thermique selon l'invention comporte également un vilebrequin, et ledit dispositif de commande traverse de préférence le bras de vilebrequin.

Le moteur thermique selon l'une des revendications précédentes, comporte également un vilebrequin, et, de préférence, les deux étages formés chacun par un pignon (37,38) sont du même côté du bras de vilebrequin.

Selon une réalisation, le pignon dudit premier étage présente un diamètre inférieur au diamètre du pignon dudit deuxième étage. Cela permet de réduire un diamètre du pignon d'actionnement correspondant et donc de réduire l'encombrement du système.

Selon une réalisation, le pignon dudit premier étage comporte moins de dents que le pignon dudit deuxième étage.

Selon une réalisation, lesdits pignons desdits premier et deuxième étages présentent sensiblement une même épaisseur axiale l'un par rapport à l'autre.

Selon une réalisation, lesdits pignons desdits premier et deuxième étages sont assemblés entre eux par frettage et/ou vissage et/ou soudage et/ou collage et/ou encliquetage et/ou mise en coopération de cannelures desdits pignons.

Selon une réalisation, lesdits pignons desdits premier et deuxième étages sont positionnés de part et d'autre d'une plaque de support.

Selon une réalisation, ladite plaque de support comporte des moyens de fixation pour être fixée sur un flasque de vilebrequin.

Selon une réalisation, lesdits pignons desdits premier et deuxième étages sont guidés en rotation par rapport à ladite plaque de support via un roulement, tel qu'un roulement du type à aiguilles.

Selon une réalisation, ledit pignon d'actionnement est monté rotatif sur un pion issu de ladite plaque de support.

Selon une réalisation, un rapport de démultiplication entre ledit pignon d'actionnement et ladite couronne dentée d'excentrique est sensiblement égal à 0,5. Cela permet de garantir une rotation de la pièce excentrique à demi-vitesse par rapport à la vitesse de rotation du vilebrequin.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, est une vue en perspective de pignons intermédiaires selon l'état de la technique ayant chacun deux plans d'engrènement respectivement avec le pignon d'actionnement et la couronne dentée d'excentrique;
La figure 2 est une vue de côté illustrant l'intégration du système de variation de taux de compression d'un moteur thermique selon la présente invention suivant toute la longueur du vilebrequin;
La figure 3 est une vue en perspective du système de variation de taux de compression d'un moteur thermique selon la présente invention sans le vilebrequin;
La figure 4 est une vue en perspective de la partie du système de variation de taux de compression intégrant un pignon intermédiaire étagé selon la présente invention;
La figure 5 est une vue éclatée d'un pignon intermédiaire étagé selon la présente invention;
La figure 6 est une représentation schématique de face d'un système de variation de taux de compression d'un moteur thermique réalisé selon une variante de la présente invention;
Les figures 7a et 7b sont des vues en perspective illustrant le montage d'un pignon intermédiaire étagé sur une plaque de support;
Les figures 8a et 8b sont respectivement des vues en perspective et en coupe partielle illustrant le montage de la plaque de support des figures 7a et 7b sur un flasque de vilebrequin.

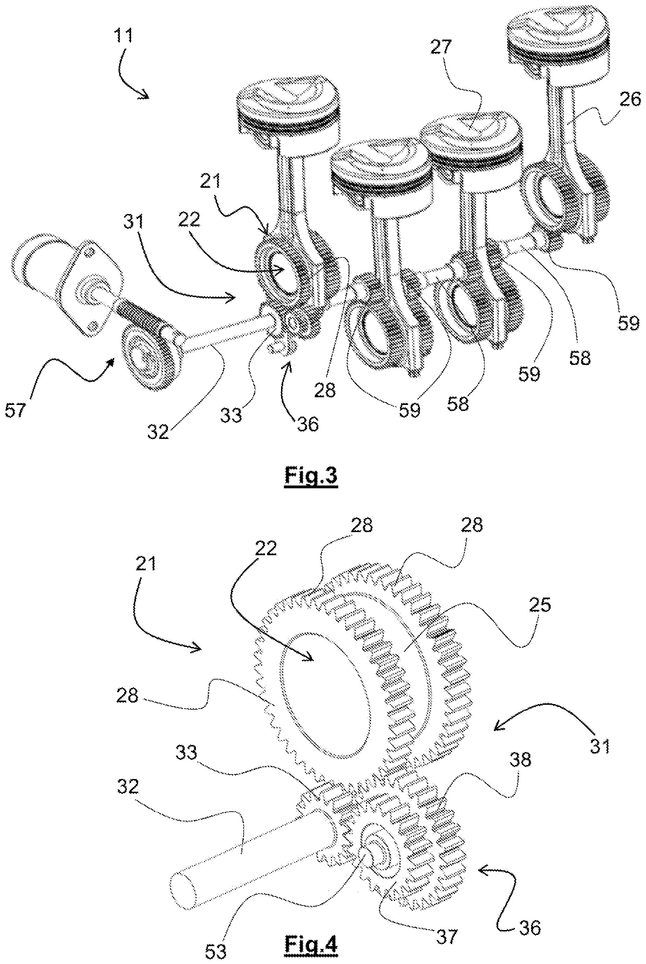

Les figures 1a et 4a représentent des vues du vilebrequin avec respectivement le pignon intermédiaire sans étagement selon l'art antérieur représenté à la figure 1, et avec les pignons étagés selon l'invention représentée à la figure 4.

Sur les figures 2 à 8, les éléments identiques, similaires, ou analogues, conservent la même référence d'une figure à l'autre.

La figure 2 est une vue de côté d'un vilebrequin 12 intégrant un système 11 de variation du taux de compression pour faire varier le taux de compression en fonction des conditions de fonctionnement du moteur. Le système 11 permet ainsi de faire fonctionner un moteur à combustion interne à un taux de compression élevé dans des conditions de faible charge afin d'améliorer son rendement. Dans des conditions de fonctionnement à fortes charges, le taux de compression peut être diminué afin d'éviter les à-coups.

Plus précisément, le vilebrequin 12 du moteur d'axe X est destiné à être monté rotatif sur un carter du moteur par l'intermédiaire de paliers. Le vilebrequin 12 comporte une pluralité de manetons 13, et de tourillons 14, séparés par des flasques 17 s'étendant sensiblement perpendiculairement par rapport à l'axe X. Le vilebrequin 12 présente en outre une extrémité avant destinée à être liée en rotation avec une poulie 18. Un volant d'inertie (non représenté) est lié en rotation à l'extrémité arrière du vilebrequin 12.

Des pièces excentriques 21 sont montées de manière rotative sur les manetons 13 via une ouverture traversante 22 réalisée dans chaque pièce excentrique 21. Comme cela est mieux visible sur la figure 4, chaque pièce excentrique 21 comporte une face externe 25 de forme excentrique par rapport à l'axe de l'ouverture 22 et donc du maneton 13 correspondant. La face externe 25 est destinée à coopérer avec une grande extrémité d'une bielle 26, laquelle a sa petite extrémité liée en rotation avec un piston 27 du moteur. Chaque pièce excentrique 21 comporte également deux couronnes dentées 28 positionnées de part et d'autre de la face externe 25.

Un dispositif de commande 31 bien visible sur la figure 3 permet de régler la position angulaire des pièces excentriques 21. A cet effet, le dispositif de commande 31 comporte un arbre d'actionnement 32 et une cascade de pignons constituée par un pignon d'actionnement 33 monté sur l'arbre d'actionnement 32, et un pignon intermédiaire étagé 36. Ce pignon intermédiaire 36 comprend un premier et un deuxième étages formés chacun respectivement par un pignon 37, 38. Le pignon 37 du premier étage engrène avec le pignon d'actionnement 33 et le pignon 38 du deuxième étage engrène avec une couronne dentée 28. Les pignons 37 et 38 sont co-axiaux. Il est également possible d'utiliser deux pignons intermédiaires ou plus. Cela dépend de l'application.

Afin de permettre une réduction du diamètre du pignon d'actionnement 33 et donc une réduction de l'encombrement de l'ensemble, le pignon 37 du premier étage présente un diamètre inférieur au diamètre du pignon 38 du deuxième étage. En outre, le pignon 37 du premier étage comporte moins de dents que le pignon 38 du deuxième étage.

Les pignons 37, 38 des premier et deuxième étages présentent sensiblement une même épaisseur axiale l'un par rapport à l'autre. Cette épaisseur correspond sensiblement à la moitié de l'épaisseur d'un pignon intermédiaire de l'état de l'art.

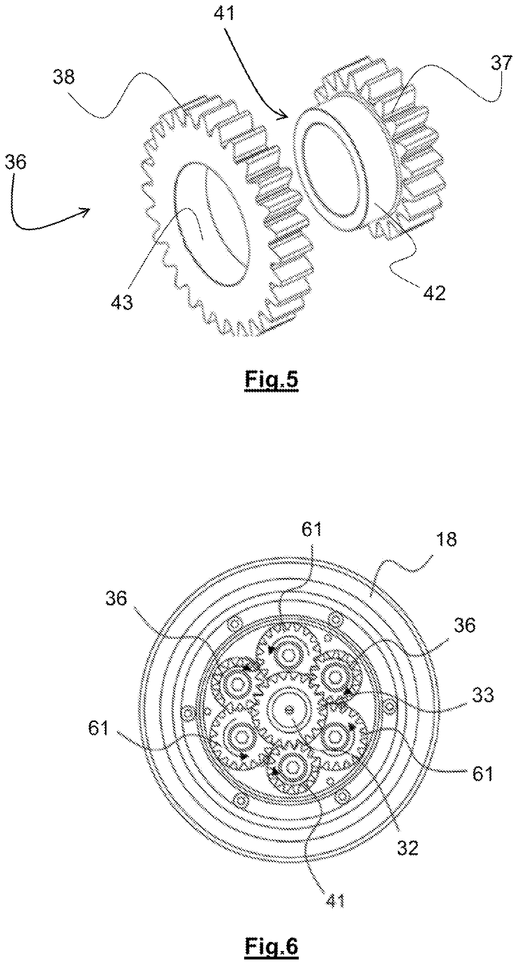

Comme on peut le voir sur la figure 5, afin d'assurer l'assemblage des pignons 37, 38 entre eux, un des deux pignons, ici le pignon 37 comporte un manchon 41 troué centralement pour autoriser le passage d'un arbre. Ce manchon 41 s'étend en saillie axiale par rapport à une face d'extrémité de la portion annulaire portant les dents du pignon 37.

L'assemblage des deux pignons 37, 38 peut être effectué par frettage et/ou vissage entre la face 42 cylindrique axiale externe du manchon 41 et la face 43 cylindrique axiale interne de la portion annulaire dentée du pignon 38. Les faces 42, 43 pourront également être soudées ou collées entre elles via une zone de soudage et/ou de collage s'étendant de façon continue sur toute la périphérie ou via quelques points de soudures équidistants. On pourra également prévoir des cannelures (frettées ou non) de forme complémentaires aménagées dans les faces 42, 43 des pignons 37, 38. Un assemblage par encliquetage des pignons 37, 38 est également envisageable. Alternativement, le montage est inversé, c'est-à-dire que le pignon 38 comporte le manchon 41 pénétrant à l'intérieur de l'ouverture centrale du pignon 37.

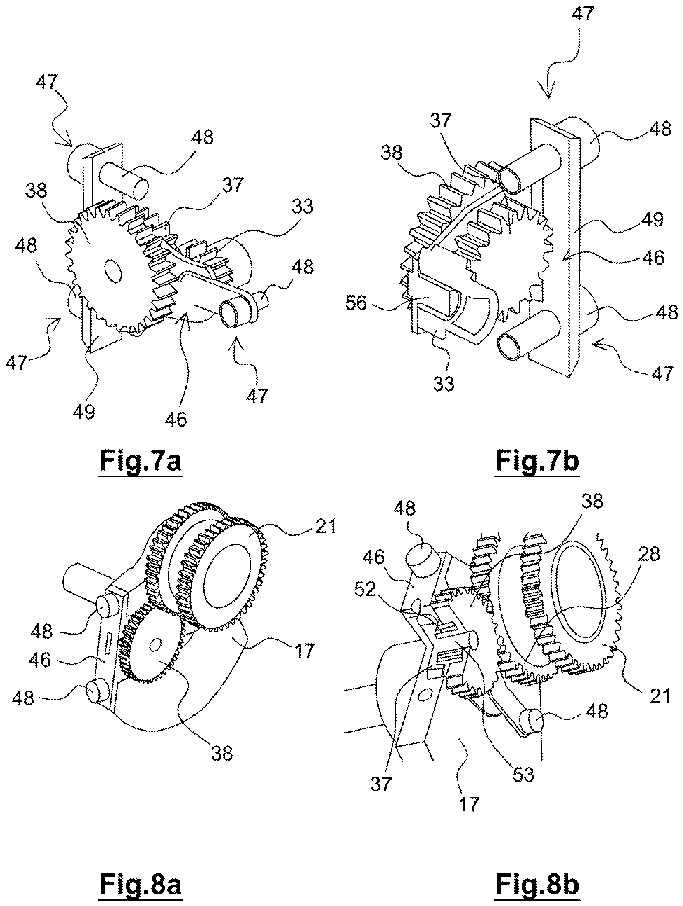

Dans le mode de réalisation des figures 7a à 8b, les pignons 37 et 38 sont positionnés de part et d'autre d'une plaque de support 46. La plaque de support 46 comporte des moyens de fixation 47 pour être fixée sur un flasque 17 de vilebrequin, de telle façon qu'au moins une partie d'au moins un des pignons, en l'occurrence le pignon 37 (cf. figure 8b) et une partie de la plaque 46 soit logée dans une creusure ménagée dans le flasque 17. En l'occurrence, ces moyens de fixation 47 comportent deux vis 48 traversant des trous réalisés dans un rebord 49 de la plaque 46 destinées à coopérer avec des alésages taraudés correspondants ménagés dans l'épaisseur du flasque 17 (cf. figure 8a), ainsi qu'une troisième vis 48 passant dans un ouverture réalisée du côté d'un extrémité opposée de la plaque 46 et destinée à coopérer avec un alésage taraudé réalisé dans une face transversale du flasque 17. En variante, les vis 48 pourront être remplacées par des rivets ou des goupilles, ou tout autre moyen de fixation adapté à l'application.

Les pignons 37 et 38 sont guidés en rotation par rapport à la plaque de support 46 via un roulement 52, tel qu'un roulement du type à aiguilles visible en figure 8b. A cet effet, le roulement 52 à aiguille est monté sur un arbre 53 traversant une ouverture réalisée dans la plaque de support 46.

Comme montré sur la figure 7b, le pignon d'actionnement 33 est monté rotatif sur un pion 56 issu de la plaque de support 46. Le pion 56 pourra être rapporté ou venir de matière avec la plaque de support 46. On assure ainsi le guidage de l'arbre 32 et du pignon 33 d'actionnement. Le pignon d'actionnement 33 engrène avec le pignon 37 d'un côté de la plaque de support 46; tandis que le pignon 38 engrène avec la couronne dentée 28 d'une pièce excentrique 21 de l'autre côté de la plaque de support 46 (cf. figure 7b et 8a).

En fonctionnement et lorsque l'arbre d'actionnement 32 est fixe en rotation par rapport au bâti, le système présente une configuration de taux de compression fixe. En transitoire de taux, la position angulaire de la pièce excentrique 21 située du côté de la poulie 18 est pilotée par la position angulaire de l'arbre d'actionnement 32 pour ainsi transiter vers un nouveau point de taux de compression. A cet effet, l'arbre d'actionnement 32 pourra être actionné par exemple au moyen d'un engrenage à roue et vis sans fin 57 (cf. figure 3), ou tout autre moyen de déplacement de l'arbre adapté.

Un rapport de démultiplication entre le pignon d'actionnement 33 et la couronne dentée 28 d'excentrique est sensiblement égal à 0,5. Cela permet de garantir une rotation de la pièce excentrique 21 à demi-vitesse par rapport à la vitesse de rotation du vilebrequin.

En outre, comme cela est illustré sur la figure 3, à travers les tourillons 14 du vilebrequin 12, des arbres 58 et des pignons 59 dits de transfert transmettent la même cinématique de la pièce excentrique située du côté de l'arbre d'actionnement 32 de proche en proche sur toutes les autres pièces excentriques du vilebrequin 12. A cette fin, les pignons 59 montés sur les arbres 58 engrènent avec les couronnes dentées 28 des autres pièces excentriques.

En variante, comme cela est illustré par la figure 6, l'invention pourra également être mise en œuvre dans un agencement en train épicycloïdal dit de type "cassette" intégré à l'intérieur ou au voisinage de la poulie 18 accessoire du vilebrequin 12. Dans ce cas, un ensemble de pignons intermédiaires étagés 36 engrènent chacun d'une part avec le pignon d'actionnement 33 et d'autre part avec un pignon satellite 61 d'inversion du sens de rotation. Chaque pignon satellite 61 engrène en outre avec un pignon de transfert 59.

Les figures 1a et 4a permettent de mettre en évidence un avantage important apporté par l'invention : - à la figure 1a, selon l'art antérieur donc, on a le vilebrequin V dans lequel est creusé une poche P venant loger le pignon intermédiaire non étagé. Cette poche est proche du maneton M., - à la figure 4a, selon l'invention, le vilebrequin présente une poche P' qui est de dimensions inférieures, du fait de l'étagement du pignon intermédiaire. En outre, on note que cette poche est plus éloignée du maneton : non seulement la poche P' (la cavité) est plus petite, mais en plus elle est plus éloignée de la zone de voisinage du maneton, qui est une zone importante en termes de tenue mécanique, dont il est important de garder une épaisseur suffisante pour justement garantir la tenue mécanique de la pièce.

Grâce à l'étagement du pignon intermédiaire en deux nouveaux pignons intermédiaires 36,37, il est possible de réduire le nombre de dents du pignon d'actionnement 33. Prenons un exemple où le pignon intermédiaire 36 engrène sur l'excentrique à 28 dents ; le pignon intermédiaire 37 engrenant sur le pignon d'actionnement à 20 dents : Seulement 15 dents sont nécessaires au pignon d'actionnement 33 pour faire la cinématique de ratio 0.5 entre actionnement et excentrique. Le nombre de dents du pignon intermédiaire n'a ici pas d'impact sur la cinématique, le pignon d'actionnement est donc réduit en encombrement (diamètre), la poche sur le vilebrequin est aussi réduite, ce qui limite l'impact sur la tenue de ce bras vilebrequin.

Dans le cas de l'exemple comparatif sans étagement (figures 1 et 1a), par exemple si l'excentrique 2 possède 42 dents, avec un pignon intermédiaire non étagé 5 le pignon d'actionnement 4 doit au contraire avoir obligatoirement 21 dents afin d'avoir un ratio de 0.5 entre actionnement et excentrique.

## Revendications

1. Moteur thermique, notamment de véhicule automobile, comportant un vilebrequin (V) et un système (11) de variation d'un taux de compression dudit moteur, ledit système (11) de variation du taux de compression comprenant:
- au moins une pièce excentrique (21) montée rotative sur un maneton (13) de vilebrequin, ladite pièce excentrique (21) comportant une face externe (25) de forme excentrique destinée à coopérer avec une extrémité d'une bielle (26), ainsi qu'au moins une couronne dentée (28),
- un dispositif de commande (31) de la position angulaire de ladite pièce excentrique (21) comportant un pignon d'actionnement (33) monté sur un arbre d'actionnement (32), **caractérisé en ce que** ledit dispositif de commande (31) comporte en outre au moins un pignon intermédiaire étagé (36) comprenant au moins un premier et un deuxième étages formés chacun par un pignon (37, 38), le pignon (37) dudit premier étage engrenant avec ledit pignon d'actionnement (33) et le pignon (38) dudit deuxième étage engrenant avec ladite couronne dentée d'excentrique (28), ledit dispositif de commande (31) traversant le bras de vilebrequin.

2. Moteur thermique selon la revendication précédente, **caractérisé en ce qu'**il comporte également un vilebrequin (V), et **en ce que** les deux étages formés chacun par un pignon (37,38) sont du même côté du bras de vilebrequin.

3. Moteur thermique selon l'une des revendications précédentes, **caractérisé en ce que** le pignon (37) dudit premier étage présente un diamètre inférieur au diamètre du pignon (38) dudit deuxième étage.

4. Moteur thermique selon l'une des revendications précédentes, **caractérisé en ce que** le pignon (37) dudit premier étage comporte moins de dents que le pignon (38) dudit deuxième étage.

5. Moteur thermique selon l'une quelconque des revendications précédentes, **caractérisé en ce que** lesdits pignons (37, 38) desdits premier et deuxième étages présentent sensiblement une même épaisseur axiale l'un par rapport à l'autre.

6. Moteur thermique selon l'une quelconque des revendications précédentes, **caractérisé en ce que** lesdits pignons (37, 38) desdits premier et deuxième étages sont assemblés entre eux par frettage et/ou vissage et/ou soudage et/ou collage et/ou encliquetage et/ou mise en coopération de cannelures desdits pignons (37, 38).

7. Moteur thermique selon l'une quelconque des revendications précédentes, **caractérisé en ce que** lesdits pignons (37, 38) desdits premier et deuxième étages sont positionnés de part et d'autre d'une plaque de support (46).

8. Moteur thermique selon la revendication précédente, **caractérisé en ce que** ladite plaque de support (46) comporte des moyens de fixation (47) pour être fixée sur un flasque (17) de vilebrequin.

9. Moteur thermique selon la revendication 7 ou 8, **caractérisé en ce que** lesdits pignons (37, 38) desdits premier et deuxième étages sont guidés en rotation par rapport à ladite plaque de support (46) via un roulement (52), tel qu'un roulement du type à aiguilles.

10. Moteur thermique selon l'une quelconque des revendications 7 à 9, **caractérisé en ce que** ledit pignon d'actionnement (33) est monté rotatif sur un pion (56) issu de ladite plaque de support (46).

11. Moteur thermique selon l'une quelconque des revendications précédentes, **caractérisé en ce qu'**un rapport de démultiplication entre ledit pignon d'actionnement (33) et ladite couronne dentée d'excentrique (28) est sensiblement égal à 0,5.

## Patentansprüche

1. Wärmekraftmaschine, insbesondere für Kraftfahrzeug, die eine Kurbelwelle (V) und ein System (11) zur Veränderung einer Verdichtungsrate der Maschine umfasst, wobei das System (11) zur Veränderung der Verdichtungsrate Folgendes umfasst:
- mindestens ein exzentrisches Teil (21), das drehend auf einem Kurbelwellenzapfen (13) montiert ist, wobei das exzentrische Teil (21) eine externe Fläche (25) mit exzentrischer Form umfasst, die dazu bestimmt ist, mit einem Ende eines Pleuels (26) zusammenzuwirken, sowie mindestens einen Zahnkranz (28),
- eine Steuervorrichtung (31) der Winkelposition des exzentrischen Teils (21), die ein Betätigungsritzel (33) umfasst, das auf eine Betätigungswelle (32) montiert ist, **dadurch gekennzeichnet, dass** die Steuervorrichtung (31) außerdem mindestens ein gestuftes Zwischenritzel (36) umfasst, das mindestens eine erste und eine zweite Stufe umfasst, die jeweils von einem Ritzel (37, 38) gebildet sind, wobei das Ritzel (37) der ersten Stufe in das Betätigungsritzel (33) eingreift, und das Ritzel (38) der zweiten Stufe in den Exzenter-Zahnkranz (28) eingreift, wobei die Steuervorrichtung (31) die Kurbelwelle durchquert.

2. Wärmekraftmaschine nach dem vorstehenden Anspruch, **dadurch gekennzeichnet, dass** sie auch eine Kurbelwelle (V) umfasst, und dass die zwei Stufen, die jeweils von einem Ritzel (37, 38) gebildet sind, auf derselben Seite des Kurbelwellenarms liegen.

3. Wärmekraftmaschine nach einem der vorstehenden Ansprüche, **dadurch gekennzeichnet, dass** das Ritzel (37) der ersten Stufe einen Durchmesser aufweist, der kleiner ist als der Durchmesser des Ritzels (38) der zweiten Stufe.

4. Wärmekraftmaschine nach einem der vorstehenden Ansprüche, **dadurch gekennzeichnet, dass** das Ritzel (37) der ersten Stufe weniger Zähne aufweist als das Ritzel (38) der zweiten Stufe.

5. Wärmekraftmaschine nach einem der vorstehenden Ansprüche, **dadurch gekennzeichnet, dass** die Ritzel (37, 38) der ersten und zweiten Stufe im Wesentlichen eine gleiche axiale Stärke zueinander aufweisen.

6. Wärmekraftmaschine nach einem der vorstehenden Ansprüche, **dadurch gekennzeichnet, dass** die Ritzel (37, 38) der ersten und zweiten Stufe miteinander durch Ringarmierung und/oder Schrauben und/oder Schweißen und/oder Kleben und/oder Einrasten und/oder Herstellen der Zusammenwirkung von Nuten der Ritzel (37, 38) zusammengefügt sind.

7. Wärmekraftmaschine nach einem der vorstehenden Ansprüche, **dadurch gekennzeichnet, dass** die Ritzel (37, 38) der ersten und zweiten Stufe zu jeder Seite einer Tragplatte (46) positioniert sind.

8. Wärmekraftmaschine nach dem vorstehenden Anspruch, **dadurch gekennzeichnet, dass** die Tragplatte (46) Befestigungsmittel (47) umfasst, um auf einem Kurbelwellenflansch (17) befestigt zu sein.

9. Wärmekraftmaschine nach Anspruch 7 oder 8, **dadurch gekennzeichnet, dass** die Ritzel (37, 38) der ersten und zweiten Stufe in Drehung bezüglich der Tragplatte (46) über ein Lager (52), wie ein Lager vom Nadellagertyp, geführt sind.

10. Wärmekraftmaschine nach einem der Ansprüche 7 bis 9, **dadurch gekennzeichnet, dass** das Betätigungsritzel (33) drehend auf einem Stift (56), der aus der Tragplatte (46) hervorgeht, montiert ist.

11. Wärmekraftmaschine nach einem der vorstehenden Ansprüche, **dadurch gekennzeichnet, dass** das Untersetzungsverhältnis zwischen dem Betätigungsritzel (33) und dem Exzenter-Zahnkranz (28) im Wesentlichen gleich 0,5 ist.

## Claims

1. A heat engine, in particular of a motor vehicle, comprising a crankshaft (V) and a system (11) for varying a compression ratio of said engine, said system (11) for varying the compression ratio including:
- at least one eccentric part (21) rotatably mounted on a crank pin (13), said eccentric part (21) comprising an outer face (25) of eccentric shape intended to cooperate with an end of a rod (26), and at least one ring gear (28),
- a control device (31) of the angular position of said eccentric part (21) comprising an actuating pinion (33) mounted on an actuating shaft (32), **characterized in that** said control device (31) furthermore comprises at least one stepped intermediate pinion (36) including at least a first and a second step, each formed by a pinion (37, 38), the pinion (37) of said first step meshing with said actuating pinion (33) and the pinion (38) of said second step meshing with said eccentric ring gear (28), said control device (31) traversing the crankshaft arm.

2. The heat engine according to the preceding claim, **characterized in that** it also comprises a crankshaft (V), and **in that** the two steps, each formed by a pinion (37, 38), are on the same side of the crankshaft arm.

3. The heat engine according to one of the preceding claims, **characterized in that** the pinion (37) of said first step has a diameter smaller than the diameter of the pinion (38) of said second step.

4. The heat engine according to one of the preceding claims, **characterized in that** the pinion (37) of said first step comprises fewer teeth than the pinion (38) of said second step.

5. The heat engine according to any one of the preceding claims, **characterized in that** said pinions (37, 38) of said first and second steps have substantially the same axial thickness with respect to one another.

6. The heat engine according to any one of the preceding claims, **characterized in that** said pinions (37, 38) of said first and second steps are assembled with one another by shrink fitting and/or screwing and/or welding and/or bonding and/or catching and/or placing of grooves of said pinions (37, 38) in cooperation.

7. The heat engine according to any one of the preceding claims, **characterized in that** said pinions (37, 38) of said first and second steps are positioned on either side of a support plate (46).

8. The heat engine according to the preceding claim, **characterized in that** said support plate (46) comprises attachment means (47) for being attached on a crankshaft flange (17).

9. The heat engine according to Claim 7 or 8, **characterized in that** said pinions (37, 38) of said first and second steps are guided in rotation with respect to said support plate (46) via a bearing (52), such as a needle-type bearing.

10. The heat engine according to any one of Claims 7 to 9, **characterized in that** said actuating pinion (33) is rotatably mounted on a pin (56) originating from said support plate (46).

11. The heat engine according to any one of the preceding claims, **characterized in that** a gear ratio between said actuating pinion (33) and said eccentric ring gear (28) is substantially equal to 0.5.
